# EUROPEAN PATENT APPLICATION

(11) **EP 4 570 484 A1**
(43) Date of publication of application: **18.06.2025**
(21) Application number: 24216850.8
(22) Date of filing: 02.12.2024
(51) Int. Cl.: B29D 30/38, B29C 48/07, B29C 48/15, B29C 48/154, B29C 48/156, B29C 48/30, B29C 48/34, B29C 70/20, B29D 30/02, B29C 48/285, B29C 48/25

(54) **METHOD AND MACHINE FOR MANUFACTURING A CORD-REINFORCED ELASTOMER COMPOSITION BAND**

(30) Priority: 12.12.2023 US 202318536984
(71) Applicant: The Goodyear Tire & Rubber Company, Akron, OH 44316 (US)
(72) Inventor: MARTINS AMARAL, Thiago, L-9054 Ettelbruck (LU); SPORTELLI, Francesco, 3249 Bettembourg (LU); LETTIERI, Joseph Carmine, Hudson, 44236 (US); HINQUE, Daniel Paul Luc Marie, B-6720 Habay-la-Neuve (BE)
(74) Representative: Kutsch, Bernd

(57) **Abstract**

A method of manufacturing a cord-reinforced elastomer composition band is disclosed. The method comprises: providing multiple parallel cords; extruding an elastomer composition onto the cords in a first zone to form a first end portion of the band; extruding the elastomer composition onto the parallel cords in the first zone while moving the first end portion of the band in parallel to the cords and away from the first zone; and holding the parallel cords at a constant distance relative to one another in a second zone which is adjacent and downstream the first end portion and which moves with the first end portion of the band in parallel to the cords and away from the first zone. Also, a machine for manufacturing an elastomer composition band reinforced by multiple parallel cords is disclosed. The machine comprises: an elongated channel for forming the band; a first cord guide for slidingly guiding the cords in parallel and spaced apart from one another into the channel; a die for extruding the elastomer composition into the channel to cover the cords; and a second cord guide for guiding the cords in parallel and spaced apart from one another. The second cord guide is adapted to slide through and along the elongated channel.

## Description

### Field of the Invention

The present invention is directed to a method of manufacturing a cord-reinforced elastomer composition band, and to a method of manufacturing a tire comprising one or more bands manufactured in accordance with said method and/or its steps. Furthermore, the present invention is directed to a machine for manufacturing cord-reinforced elastomer composition bands, and also to a use of such a machine in a method, such as one of the above-mentioned methods, for manufacturing a cord-reinforced elastomer composition band and/or a tire comprising such a band.

### Background of the Invention

Many tire types include tire components comprising cord-reinforced elastomer composition bands. Typically, such bands are manufactured with a calendar unit in which a plurality of cords is coated from two sides with flat milled sheets of rubber material. While such processes have been refined over the past decades, room for improvement remains for manufacturing advanced cord-reinforced elastomer composition bands.

### Summary of the Invention

The invention relates to a method in accordance with claim 1 or 8, respectively, and to a machine in accordance with claim 10.

Dependent claims refer to preferred embodiments of the invention.

In a first aspect, a method of manufacturing a cord-reinforced elastomer composition band is disclsoed, wherein the method comprises steps of providing multiple parallel cords and starting extruding at least one elastomer composition onto the parallel cords in a first zone to form a first end portion of the cord-reinforced elastomer composition band. Furthermore, and still in accordance with the first aspect, the method comprises the steps of further extruding the elastomer composition onto the parallel cords in the first zone while moving the first end portion of the cord-reinforced band in parallel to the cords and away from the first zone, and holding the parallel cords at a constant distance relative to one another in a second zone which is adjacent and downstream the first end portion and which moves with the first end portion of the cord-reinforced band in parallel to the cords and away from the first zone.

In a second aspect, a method of manufacturing a tire including the steps according to the first aspect is disclosed.

In a third aspect, a machine for manufacturing an elastomer composition band reinforced by multiple parallel cords is disclosed, wherein the machine comprises an elongated channel for forming the band; a first cord guide for slidingly guiding the cords in parallel and spaced apart from each other into the channel; at least one die for extruding the elastomer composition into the channel to cover the cords; and a second cord guide for guiding the cords in parallel and spaced apart from each other, wherein the second cord guide is adapted to slide through and along the elongated channel.

### Brief Description of the Drawings

The invention will be described by way of example and with reference to the accompanying drawings in which:
FIG. 1 is a schematic cross-section of a machine for manufacturing cord-reinforced elastomer composition bands according to a preferred embodiment of the invention;
FIG. 2 is a cross-section of the machine of Figure 1, particularly in the plane A--A as indicated in Figure 1;
FIG. 3 is another cross-section of the machine of Figure 1, particularly in the plane B--B as indicated in Figure 1;
FIG. 4a is another schematic cross-section of another machine for manufacturing a cord-reinforced elastomer composition band, in accordance with another embodiment of the present invention;
FIG. 4b is a schematic cross-section of a first cord guiding means of the machine shown in Figure 4a;
FIG. 4c is a schematic cross-section of the second, slidable cord guiding means of the machine shown in Figure 4a;
FIG. 5 is a schematic cross-section of the same machine as shown in Figure 4a with cords held by the cord guiding means;
FIG. 6 is a schematic cross-section of the same machine as shown in Figures 4a and 5, wherein an elastomer composition has been extruded into a channel of the machine between the first cord guiding means and the second cord guiding means;
FIG. 7 is again a schematic cross-section of the same machine as already shown in Figures 4a, 5, and 6, wherein the second cord guiding means has left the channel;
FIG. 8 is another schematic cross-section of the same machine as shown in Figures 4a, 5, 6, and 7, wherein the second cord guiding means has been removed from the cords and/or the cord reinforced band;
FIG. 9 is a diagram showing volume fractions of cords (VF, in percent) against a cord diameter (D, in millimeters) for a cubic packing of cords (cp) and a hexagonal packing of cords (hp), obtained in accordance with embodiments of the present invention;
FIG. 10 is a schematic sideview of a non-pneumatic tire comprising a shearband with one or more cord-reinforced elastomer composition bands manufactured in accordance with an embodiment of the present invention; and
FIG. 11 is a schematic cross-section of a pneumatic tire comprising one or more cord-reinforced elastomer composition bands or plies manufactured in accordance with an embodiment of the present invention.

### Detailed Description of Preferred Embodiments of the Invention

A method of manufacturing a cord-reinforced elastomer composition band is disclosed. Said method comprises the steps of providing multiple parallel cords, and (starting) extruding at least one elastomer composition onto the parallel cords in a first zone (or, in other words, an extrusion zone or elastomer composition extrusion zone), to form a first end portion of the cord-reinforced elastomer composition band. Furthermore, the method comprises the steps of further extruding (or continuing extruding) the elastomer composition onto the parallel cords in the first zone while moving the first end portion of the cord-reinforced elastomer composition band in parallel to the cords and away from the first zone, and holding the parallel cords at a constant distance relative to one another (or particularly spaced apart from one another) in a second zone which is adjacent and/or downstream (such as with respect to the direction of moving) the first end portion and which moves with the first end portion of the cord-reinforced elastomer composition band in parallel to the cords and away from the first zone. Thus, the method allows holding and/or guiding the cords in both, the first zone and the second zone so as to keep the cords at a determined distance with respect to one another, particularly during the elastomer composition extrusion. This allows for manufacturing high quality cord-reinforced elastomer composition bands with an accurate positioning of the cords. Moreover, the inventive method allows making bands with a dense packing of cords, or, in other words a high-volume fraction of cords, whereas this is more difficult with prior art methods.

Preferably, the parallel cords are arranged in and/or form at least one plane of parallel cords (preferably, being spaced apart from each other in the at least one plane), and wherein the elastomer composition is optionally extruded onto each side of said plane.

Preferably, the parallel cords are arranged in and/or form at least two parallel planes. Preferably, (neighboring) cords are spaced apart from one another within said planes. In particular, in a case of multiple planes of parallel cords, or in other words, layers of parallel cords, the present method allows a defined relative positioning of cords and holding said position during extrusion.

Preferably, the at least two parallel planes comprise a first plane and second plane, transversely displaced or offset with respect to each other, and wherein cords of the first plane are arranged between the cords of the second plane, viewed in a cross section perpendicular to the parallel cords. In other words, the cords of the first plane are shifted relative to the cords of the second plane in a direction perpendicular to the cords. The cords of both, preferably all, planes are parallel to one another.

Preferably, the cords move through and along a channel, and wherein the elastomer composition is optionally extruded onto the cords and/or into the channel in the first zone to define the outer shape of the band. Preferably, the channel has one or more walls encasing a circumference and/or outer sides of the band perpendicular to an elongated extension of the band and/or the cords.

Preferably, the parallel cords are held at a constant distance relative to one another in the second zone by at least one cord guiding means moving with the first end portion away from the first zone. In other words, said cord guiding means moves downstream.

Preferably, the cords (and, e.g., also the band) move through and along a channel and wherein the elastomer composition is extruded onto the cords and into the channel in the first zone to define the outer shape of the band, and wherein the cord guiding means is slidingly moving through the channel together with and downstream of the first end portion. Optionally, the cord guiding means contacts the walls of the channel, e.g., contacts the walls of the channel, avoiding passing of elastomer composition between the cord guiding means and the walls of the channel. It is also possible to mention that the cord guiding means slides along the channel in sealed contact with the walls, such as sealed against passing of the elastomer composition.

Preferably, the cords are tensioned in a direction in parallel to the extension of the channel and/or the direction of movement of the cord guiding means.

Preferably, the cord guiding means is removed after the first end portion has moved out of an end or end portion of the channel which is preferably essentially opposite to the first zone. In particular, once the first end portion of the cord-reinforced elastomer composition band has left the channel, the cords are held in fixed positions relative to one another in said end portion so that the cord guiding means is not needed anymore.

Preferably, the elastomer composition is a rubber composition and/or the cords are selected from one or more of textile cords, steel cords, glass fiber cords, and carbon material cords.

Preferably, the band has one or more of i) a thickness within a range of 0.5 mm to 10 mm, ii) a width within a range of 4 mm to 400 mm, iii) cords having a (maximum) diameter within a range of 0.1 mm to 2 mm, and iv) an essentially rectangular cross-section perpendicular to the (elongated extension of the) cords.

Also, a method of manufacturing a tire comprising multiple tire components is disclosed. The method includes the step of applying at least one band manufactured according to the above-mentioned first aspect and/or one or more of its embodiments. In other words, the method according to the second aspect includes the method steps of said first aspect and/or of one or more of its embodiments. Manufacturing a tire with bands manufactured as described herein above makes the manufacturing process more reliable and allows to provide high quality cord-reinforced bands in tires, particularly with determined relative positions of the cords and/or densely packed cords.

Preferably, the band is applied (to the tire) as at least one of a belt ply, an overlay ply, an overlay ply strip, a carcass ply, and a layer of a shearband. The terms band and ply may be used interchangeably herein.

Preferably, the tire is a non-pneumatic tire comprising a (circumferential) tread band having a circumferential tread portion and a circumferential shearband carrying the tread portion, a (circumferential) hub portion, and a (circumferential) supporting portion (e.g., comprising a plurality of spokes) supporting the tread band on the hub portion. Optionally, the shearband comprises a plurality of stacked circumferential elastomer composition layers, wherein at least one of the layers consists of the cord-reinforced elastomer composition band. Optionally, some of the (radially) stacked circumferential elastomer composition layers are cord-reinforced and some others are not.

In the third aspect, a machine for manufacturing an elastomer composition band reinforced by multiple parallel cords is disclosed. The machine comprises an elongated channel for forming the band; a first cord guide (or guiding means) for slidingly guiding the cords in parallel and spaced apart from one another into the channel; at least one die (or die portion) for extruding the elastomer composition into the channel to cover the cords; and a second cord guide (or guiding means) for guiding the cords in parallel and spaced apart from one another, wherein the second cord guide (and optionally the elongated channel) is adapted to slide through and along the elongated channel.

Thus, similar to the above-mentioned methods, the machine allows manufacturing cord-reinforced elastomer composition bands which have a defined positioning of cords relative to one another. Also, the provision of the cord guides allows high volume fractions of cords if desired. Touching of neighboring cords can be avoided more easily.

Preferably, the elongated channel has a first end portion and a second end portion opposite to the first end portion, and wherein the first cord guide is provided at the first end portion. Preferably, the channel is straight and/or formed by one or more walls of the machine for forming a circumference or cross-section of the band, e.g., viewed perpendicularly to the elongated direction of the elongated channel and/or an elongated extension of the cords. For instance, the cords extend in parallel to the walls through the channel. Optionally, the machine comprises a body or body portion comprising said walls and/or said channel. It is noted that the term band shall not be understood as being limited to a ring-shaped or closed band. For instance, another suitable or alternative term for band is strip.

Preferably the first cord guide forms at least a portion of the die, or die portion, for extruding the elastomer composition into the elongated channel and onto the cords.

Preferably the second cord guide clamps or holds the cords against movement, particularly in a direction in parallel to the channel or the cords.

Preferably the cords are tensioned by cord tensioning means such as arrange upstream the first cord guide and/or downstream the second cord guide. Optionally, the cords may be held upstream the first cord guide by one or more coils, and/or downstream the second cord guide by at least one coil.

Preferably the elongated channel and the second cord guide are configured to allow the second cord guide to slide from the first end portion of the channel to the second end portion of the channel and out of the second end portion of the elongated channel. As mentioned above, optionally, the second cord guide is in sealed contact with the walls of the channel.

Preferably the elongated channel has one or more of i) an essentially rectangular cross-section perpendicular to its direction of elongation, ii) a height within a range of 0.5 mm to 10 mm, iii) a width within a range of 4 mm to 400 mm, and iv) a length within a range of 10 cm to 2 m. Thus, the channel can define an outer shape of the band, particularly perpendicular to the direction of elongation of the band.

Preferably one or more of the first cord guide and the second cord guide comprises a plurality of parallel cord guiding channels for guiding the cords in parallel and spaced from each other, wherein each of the cord guiding channels optionally has a diameter within a range of 0.2 mm to 2 mm, or preferably 0.3 mm to 2 mm, or 0.4 mm to 2 mm, or 0.5 mm to 2 mm.

Preferably the cord guiding channels extend in a direction parallel to the elongated direction of the elongated channel.

Preferably the cord guiding channels are arranged and/or packed in one or more of a hexagonal pattern and an interlaced pattern, such as viewed in a plane perpendicular to the elongated direction of the elongated channel and/or perpendicular to the extension of the cords.

Preferably the first cord guide is connected with the channel or mounted to the channel.

Preferably the cord guiding channels of the first cord guide and the cord guiding channels of the second cord guide are arranged for holding the cords extending between the first cord guide and the second cord guide in parallel to one another. In other words, said cord guides and/or cord guiding channels restrict the movement of the cords in directions perpendicular to the direction of elongation of the cords and/or the elongated channel.

Preferably the elastomer composition is a rubber composition. Optionally, said elastomer composition (such as the rubber composition) comprises one or more of rubber (such as comprising one or more of natural rubber, synthetic polyisoprene, butadiene rubber, styrene-butadiene rubber, and butyl rubber), a filler (such as comprising one or more of carbon black and silica), resin (such as a hydrocarbon resin selected from one or more of coumarone-indene resins, petroleum hydrocarbon resins, terpene resins, styrene/alphamethylstyrene resins, terpene phenol resins, rosin derived resins and copolymers and/or mixtures thereof), accelerators, antidegradants, oils, liquid diene-based polymers, coupling agents (such as carbon black coupling agents and/or silanes), sulfur donors, and sulfur. Liquid means herein that a material is in a liquid state at 23°C. The composition may be a sulfur-curable rubber composition. Optionally, elastomer compositions, such as rubber compositions may comprise fibers.

Preferably the elastomer composition or rubber composition comprises 100 phr of rubber comprising one or more of natural rubber, synthetic polyisoprene, polybutadiene rubber, and styrene butadiene rubber. Preferably, the composition comprises at least 50 phr of natural rubber (such as from 50 phr to 100 phr of natural rubber), and optionally up to 50 phr (e.g., 5 phr to 50 phr) of polybutadiene rubber and/or styrene butadiene rubber. Additionally, the elastomer or rubber composition comprises a filler, preferably comprising carbon black and/or silica. For instance, such filler may be within a range of 20 phr to 150 phr, preferably within a range of 30 phr to 90 phr. Preferably, such a filler comprises predominantly carbon black. The elastomer or rubber composition may further comprise from 1 phr to 40 phr of resin, preferably including a phenolic resin. Moreover, the elastomer or rubber composition may comprise from 1 phr to 30 phr of oil, preferably from 1 phr to 20 phr of oil. Finally, the elastomer or rubber composition may typically comprise from 1 phr to 15 phr of antidegradant(s), from 0.5 phr to 10 phr of accelerator(s), from 0.1 phr to 10 phr of zinc oxide, and from 0.5 phr to 10 phr of sulfur. Further ingredients may also be present.

Preferably the rubber composition comprises predominantly natural rubber and/or synthetic polyisoprene, such as from 55 phr to 95 phr of natural rubber and/or synthetic polyisoprene, from 5 phr to 45 phr of styrene butadiene rubber, from 40 phr to 60 phr of a filler, e.g., selected from one or more of carbon black and silica (preferably, predominantly carbon black), from 5 phr to 30 phr of oil, and up to 10 phr of resin (e.g., one or more of those mentioned above).

Preferably one or more of the cords comprise or consist of one or more of textile material, glass fiber material, carbon fiber material, boron fiber material, basalt fiber material, plant-based material, and combinations of these materials. Optionally, multiple cords comprise different materials and/or are hybrid cords of such different materials. Optionally, said plant-based material comprises one or more of cotton, hemp, flax, sisal, and bast.

Preferably one or more of the cords comprise or consist of metal, such as steel or brass-coated steel.

Preferably one or more of the cords comprise or consist of a textile material selected from one or more of polyester (preferably PET), polyamide (preferably, one or more of PA-6, PA-6,6, e.g., Nylon^{™}, aromatic polyamide / aramid), and rayon. Optionally, one or more of these materials may be recycled materials. Optionally, multiple cords comprise different materials and/or are hybrid cords of such different materials.

Preferably one or more of the cords are monofilament or multifilament cords.

Preferably one or more of the cords have a (maximum) diameter (measured perpendicular to the extension of the cord) within a range of 0.1 mm to 2 mm, preferably 0.1 mm to 1 mm, or even more preferably 0.2 mm (or 0.3 mm, or even 0.4 mm) to 0.9 mm.

Also disclosed is a use of the machine according to the afore-mentioned aspect, or one or more of its embodiments, for manufacturing a cord-reinforced elastomer composition band and/or a tire comprising such a band, optionally in accordance with a method disclosed herein.

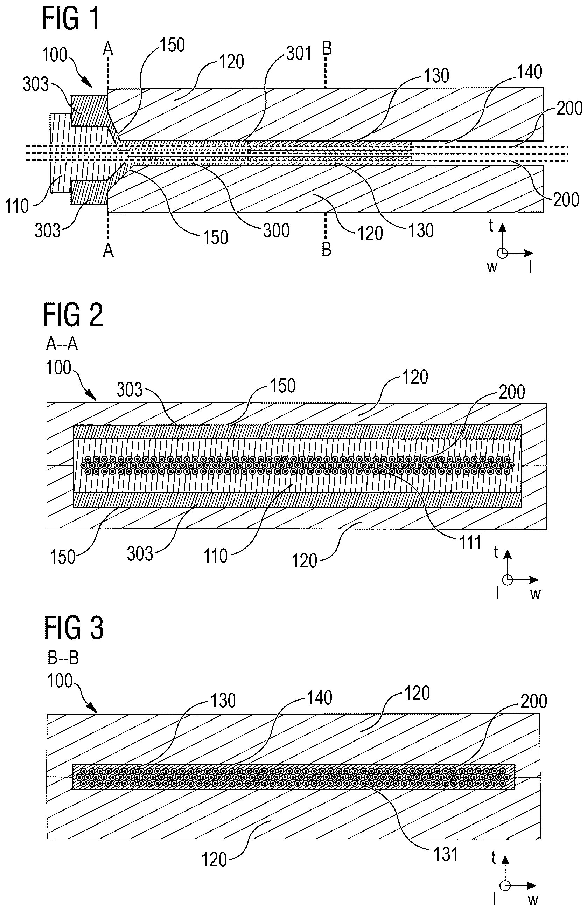

Figure 1 shows a first preferred embodiment of a machine 100 for manufacturing a cord-reinforced elastomer composition band 300. In particular, the machine 100 comprises a first cord guide 110, a second cord guide 130 slidable in an elongated channel 140 of a body portion 120 of the machine 100. In particular, the channel 140 may be formed by one or more walls of the body portion 120 and/or the machine 100. The channel 140 preferably has an essentially rectangular cross-section, perpendicular to a direction of the elongation of the channel 140. In Figure 1, the channel 140 is elongated in a (length) direction I. A width is shown in direction w, and a thickness is indicated in direction t. Furthermore, a plurality of cords 200 is guided and/or held by the first cord guide 110 and the second cord guide 130, wherein the cords 200 extend in parallel to one another through the elongated channel 140. In order to form the cord-reinforced elastomer composition band 300, an elastomer composition 303 is extrudable or extruded onto the cords 200 into the channel 140, as, e.g., here via a die 150 which is formed in the present non-limiting embodiment by slots formed between portions of the first cord guide 110 and portions of the body portion 120 of the machine 100, for feeding and/or injecting the elastomer composition 303 onto the cords 200. In other words, the machine 100 includes at least one die 150 for extruding the elastomer composition 303 onto the cords 200 so as to form a portion of the cord-reinforced elastomer composition band 300. In particular, the die 150, or, in other words, a die portion, may include one or more slot-shaped openings or nozzles for extruding and/or injecting the elastomer composition 303 into the channel 140 and/or onto the cords 200. The slots, slot-shaped openings or nozzles preferably extend in parallel to one or more planes of the cords 200. Upon injection of the elastomer composition 303 onto the cords 200, the second cord guide 130 slides within the channel 140 away from the stationary first cord guide 110. Such a movement may for instance be triggered by one or more of an extrusion of elastomer composition 303 into the channel 140, pulling of the cords 200 away from the first cord guide 110 in parallel to the channel 140, and/or driving the second cord guide 130 away from the first cord guide 110 through the channel 140. Still with respect to Figure 1, after having started extrusion of the elastomer composition, and sliding of the second cord guide 130, a first end portion 301 of the cord-reinforced elastomer composition band 300 is formed adjacent to the second sliding cord guide 130, wherein the band 300 and/or its first end portion 301 moves along the channel 140, here, in this example, in a right-hand direction.

Figure 2 shows the cross-section A--A of the machine 100 as indicated in Figure 1. The corresponding directions t, w, and I are shown for the sake of better comprehensibility. As visible in Figure 2, the elastomer composition 303 is fed through two slots of dies 150, formed by the cord guide 110 and the body portion 120 of the machine 100. The cord guide 110 comprises a plurality of cord guiding channels 111 extending in the length direction I, wherein each cord guiding channel 111 holds and/or guides one of the cords 200.

Figure 3 shows the cross-section B--B of the machine 100 as indicated in Figure 1. The corresponding directions t, w, and I are again indicated. As visible in Figure 3, the second cord guide 130 is arranged within the elongated channel 140 formed by the body portion 120, wherein the cord guide 130 comprises a plurality of cord guiding channels 131 elongated in the length direction I. Each of the cord guiding channels 131 comprises, or in other words, guides, and/or holds, one of the cords 200. Preferably, elongated cord guiding channels 131 of the second cord guide 130 and elongated cord guiding channels 111 of the first cord guide 110 (not shown in Figure 3) guiding the same cord 200, extend along a preferably common, straight line and/or in parallel to the elongated channel 140.

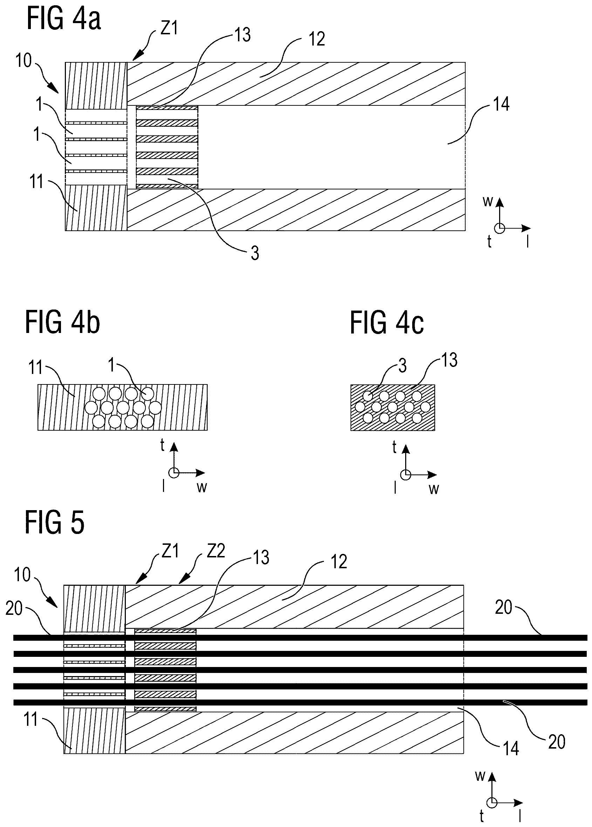

Figure 4a schematically shows another preferred embodiment of the present invention, with the purpose of demonstrating preferred method steps in accordance with an embodiment of the present invention. The machine 10 for manufacturing a cord-reinforced elastomer composition band comprises a first cord guiding means 11 having a plurality of parallel cord guiding channels 1, and a second cord guiding means 13 having a plurality of parallel cord guiding channels 3 which are (straightly) aligned with corresponding cord guiding channels 1 of the first cord guiding means 11. The first cord guiding means 11 is stationarily connected with a body portion 12 of the machine 10, which comprises the elongated channel 14 for forming the cord-reinforced elastomer composition band. The second cord guiding means 13 is adapted to slide within the channel, particularly in contact with walls surrounding and/or forming the channel 14. Furthermore, a first zone Z1, along the length direction I, is indicated, in which cords may be held in parallel by the first cord guiding means and/or an elastomer composition is extrudable into the channel 14. As in the previous embodiment, a length direction I, a width direction w, and a thickness direction t are indicated for improved comprehensibility herein. Reference signs used in Figure 4a are also used in Figures 5, 6, 7, and 8, where appropriate, and wherein Figures 5, 6, 7, and 8 show also the machine 10 or features or members thereof.

Figure 4b shows a cross-section of the first cord guiding means 11 in a plane perpendicular to the length direction I. The depicted cord guiding channels 1 have a circular cross-section for receiving, holding and/or guiding the cords. In particular, cords can slidingly move in the guiding channels 1 but are restricted with respect to movement perpendicular and/or transverse to the length direction I. As mentioned above, the length direction I can also be considered herein as a direction of elongation.

Figure 4c shows a cross-section of the second cord guiding means 13 comprising elongated cord guiding channels 3 (elongated in the length direction I) and having a circular cross-section for receiving, holding and/or guiding the cords, particularly the same cords as held by the first cord guiding means. Preferably, the elongated cord guiding channels 3 are arranged in parallel and/or are aligned with corresponding channels of the first cord guiding means, preferably such as to hold cords held by both cord guiding means in parallel with respect to one another.

Figure 5 shows again the machine 10, already shown in Figure 4a, wherein multiple cords 20 have been inserted into the cord guiding means 11, 13 (or their respective cord guiding channels) and are held in parallel to one another and to the elongated direction or length direction I of the channel 14. The second cord guiding means 13 is still in the same position adjacent or close to the first cord guiding means 11 and holds the cords 20 in a second zone Z2 along the length direction I.

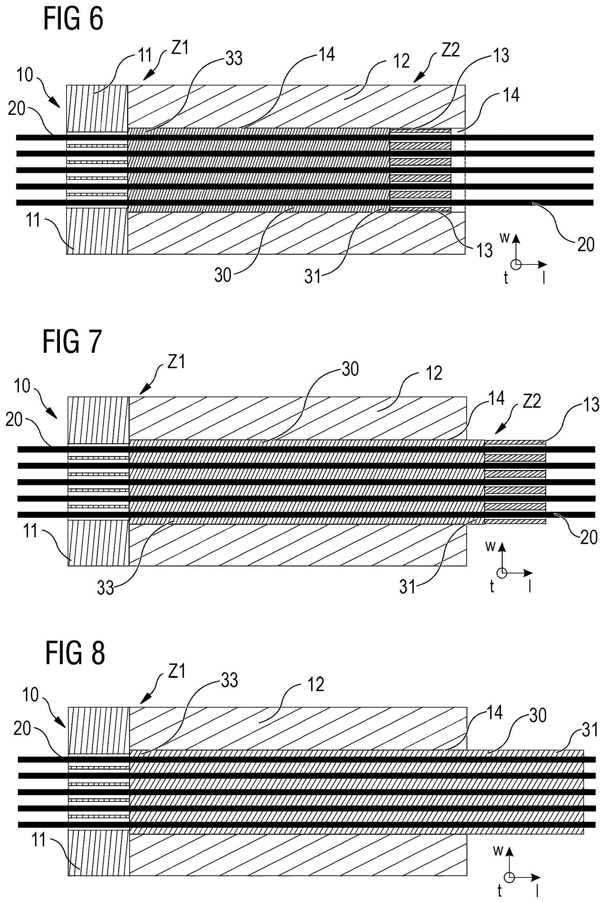

Figure 6 still shows the machine 10 in a state in which an elastomer composition 33, preferably a rubber composition, has been extruded into one end portion of the channel 14, e.g., in the first zone Z1, and the second cord guiding means 13 has been moved in parallel to the channel 14 away from the first cord guiding means 11 and/or away from the first zone Z1. In particular, the cords 20 are held by the second cord guiding means 13 in the second zone Z2, which moves together with a first end portion 31 of the formed cord-reinforced elastomer composition band 30 through the channel 14. Thus, the cords 20 are held at defined distances with respect to one another at the first end portion 31 of the band 30 by the second cord guiding means 13 (in the second zone Z2), which is adjacent (and in contact with) the first end portion 31 of the band 30, while the extruded band 30 and the second cord guiding means 13 slide along the channel 14, particularly away from the first zone Z1 and/or the first cord guiding means 11.

Figure 7 shows a state in which the band 30 has been further extruded such that the first end portion 31 of the band 30 has left already an opening of the channel 14 (or end portion of the channel 14) opposite to the first cord guiding means 11 and/or the first zone Z1, where the elastomer composition 33 is extruded or fed into the channel 14. Optionally, the second cord guiding means 13 may be removed from the cords 20. For such a purpose, it would be possible that the cord guiding means 13 comprises multiple removable parts, and/or the cords 20 may be cut downstream the cord guiding means 13 as the extrusion of the band 30 may be (e.g., only) driven by the extrusion of the elastomer composition 33 into the channel 14, and wherein the elastomer composition 33 holds the cords 20 in place at least in the end portion 31 of the band 30. In particular, the elastomer composition 33 may cool while moving through the channel 14 so that it is in a solid state upon leaving the channel 14. Depending on one or more of the elastomer composition 33 used, the length of the channel 14, the thickness and/or width of the band 30, the number and/or diameter of cords 20, extrusion speed, a person skilled in the art can optionally provide further cooling means along portions of the channel 14 ensuring a (sufficient) solidification of the cord-reinforced elastomer composition band when exiting the channel 14, if desired. As another option, downstream the first zone Z1, a further curing zone may be provided which heats up the elastomer composition (e.g., pre-cures the elastomer composition, for instance a sulfur-curable rubber composition), such as upstream a further cooling zone comprising cooling means. Cooling may for instance be provided, if deemed desirable, by water cooling means. However, typically, cooling of the cord-reinforced elastomer composition band 30 takes place without additional cooling means.

Figure 8 shows a situation in which the band 30 is further extruded in a self-sustaining process, particularly as the solidified end portion 31 of the cord-reinforced elastomer composition band 30 holds the cords 20 in place, together with the first cord guiding means 11, particularly against movement perpendicular to the length direction I.

A machine, such as one of the machines 10 and 100, or one of the methods disclosed herein, allows an improved parallel holding of cords during manufacturing a cord-reinforced elastomer composition band. Due to such an improved manufacturing machine and/or process, it is possible to provide such bands with a denser cord packing, or in other words with a higher volume fraction than with other state of the art machines and/or methods for making cord-reinforced elastomer composition bands.

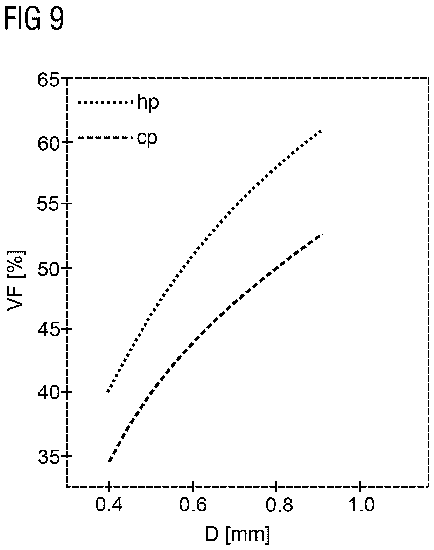

Figure 9 shows in such a context a comparison of two different cord packings perpendicular to an elongated direction of a cord-reinforced elastomer composition band. In particular, the diagram of Figure 9 shows a volume fraction VF, in percent against a cord diameter D, in millimeters for two different cord packing types, i.e. a hexagonal, interlaced cord packing, hp, and a cubic cord packing, cp. As visible in the corresponding graphs, the hexagonal cord packing hp allows higher volume fractions of cords than with the cubic cord packing cp. Thus, such a hexagonal, interlaced cord packing hp can provide a higher cord density and thereby different or improved band properties by the inclusion of more cords in the volume of the band.

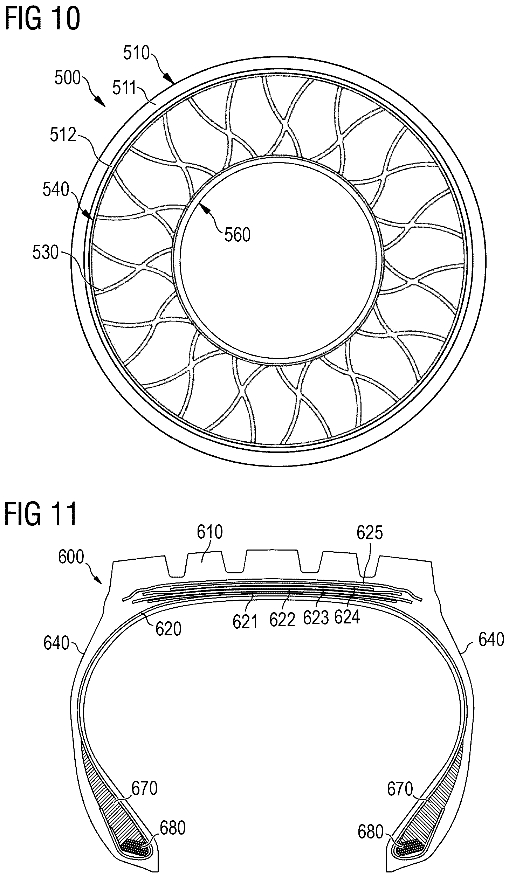

Figure 10 shows a schematic sideview of a non-pneumatic tire 500 comprising a circumferential tread band 510 including a radially outer circumferential tread portion 511 and a circumferential shearband 512 carrying the tread portion 511. Furthermore, the tire 500 comprises a circumferential hub portion 560, and a circumferential connecting or supporting structure 540 which supports the tread band 510 on the hub portion 560. The supporting structure 540 comprises a plurality of spokes 530 extending between the hub portion 560 and the tread band 510. In one embodiment, the shearband 512 comprises or consists of one or more cord-reinforced elastomer composition bands manufactured with one of the afore-mentioned methods and/or machines.

Figure 11 shows a schematic cross-section of a pneumatic tire 600, wherein said tire 600 comprises a tread portion 610, two sidewalls 640 and two bead portions comprising each an apex 670 and a bead 680. Furthermore, the tire comprises a carcass ply 620, a plurality of belt plies 621, 622, 623, 624 (in the present example four belt plies), as well as an overlay ply 625 covering the plurality of belt plies 621, 622, 623, 624, which are arranged radially between the tread portion 610 and the carcass ply 620 in a crown portion of the tire 600. In accordance with an embodiment of the present invention, one or more of the carcass ply 620, the belt plies 621, 622, 623, 624, and the overlay ply 625 comprise or consist of one or more cord-reinforced elastomer composition bands manufactured with one of the afore-mentioned methods and/or machines. Moreover, it is possible that the overlay ply 625 is formed by a ply strip which may also consist of a cord-reinforced elastomer composition band manufactured with one of the afore-mentioned methods and/or machines.

## Claims

1. A method of manufacturing a cord-reinforced elastomer composition band, the method comprising steps of:
providing multiple parallel cords;
extruding at least one elastomer composition onto the parallel cords in a first zone to form a first end portion of the cord-reinforced elastomer composition band;
extruding the elastomer composition onto the parallel cords in the first zone while moving the first end portion of the cord-reinforced elastomer composition band in parallel to the cords and away from the first zone; and
holding the parallel cords at a constant distance relative to one another in a second zone which is adjacent and downstream the first end portion and which moves with the first end portion of the cord-reinforced elastomer composition band in parallel to the cords and away from the first zone.

2. The method according to claim 1, wherein:
(i) the parallel cords are arranged in a plane and wherein the elastomer composition is extruded onto each side of said plane; or
(ii) the parallel cords are arranged in at least two parallel planes, and, optionally, wherein the at least two parallel planes comprise a first plane and second plane, which are transversely displaced with respect to each other, and wherein cords of the first plane are arranged between the cords of the second plane, viewed in a cross section perpendicular to the parallel cords.

3. The method according to at least one of the previous claims, wherein the cords move through and along a channel and wherein the elastomer composition is extruded onto the cords and into the channel in the first zone to define an outer shape of the band.

4. The method according to at least one of the previous claims, wherein the parallel cords are held at a constant distance relative to one another in the second zone by at least one cord guiding means moving with the first end portion away from the first zone.

5. The method according to claim 4, wherein the cords move through and along a channel and wherein the elastomer composition is extruded onto the cords and into the channel in the first zone to define an outer shape of the band, and wherein the cord guiding means slidingly moves through the channel together with and downstream of the first end portion, and, optionally, wherein the cord guiding means is removed after the first end portion has moved out of an end of the channel which is essentially opposite to the first zone.

6. The method according to at least one of the previous claims, wherein the elastomer composition is a rubber composition and wherein the cords are selected from one or more of textile cords, steel cords, glass fiber cords, and carbon material cords.

7. The method according to at least one of the previous claims, wherein the band has one or more of i) a thickness within a range of 0.5 mm to 10 mm, ii) a width within a range of 4 mm to 400 mm, iii) cords having a diameter within a range of 0.3 mm to 2 mm, and iv) an rectangular or essentially rectangular cross-section perpendicular to the cords.

8. A method of manufacturing a tire comprising multiple tire components, the method comprising manufacturing a cord-reinforced elastomer composition band with a method in accordance with least one of the previous claims, and applying at least one such cord-reinforced elastomer composition band preferably as at least one of a belt ply, an overlay ply, an overlay ply strip, a carcass ply, and a layer of a shearband.

9. The method according to claim 8, wherein the tire is a non-pneumatic tire comprising a tread band having a circumferential tread portion and a circumferential shearband carrying the tread portion, a hub portion, and a supporting portion supporting the tread band on the hub portion, and wherein the shearband comprises a plurality of stacked circumferential layers and wherein at least one of the layers consists of the band.

10. A machine for manufacturing an elastomer composition band reinforced by multiple parallel cords, the machine comprising:
an elongated channel for forming the band;
a first cord guide for slidingly guiding the cords in parallel and spaced apart from one another into the channel;
at least one die for extruding the elastomer composition into the channel to cover the cords; and
a second cord guide for guiding the cords in parallel and spaced apart from one another, wherein the second cord guide is adapted to slide through and along the elongated channel.

11. The machine according to claim 10, wherein the elongated channel has a first end portion and a second end portion opposite to the first end portion, and wherein the first cord guide is provided at the first end portion; and/or wherein the first cord guide is configured to form at least a portion of the die for extruding the elastomer composition into the elongated channel and onto the cords.

12. The machine according to claim 10 or 11, wherein the elongated channel and the second cord guide are configured to allow the second cord guide to slide from the first end portion of the channel to the second end portion of the channel and out of the second end portion of the elongated channel.

13. The machine according to at least one of the claims 10 to 12, wherein the elongated channel has one or more of i) a rectangular or an essentially rectangular cross-section perpendicular to its elongation, ii) a height within a range of 0.5 mm to 10 mm, iii) a width within a range of 4 mm to 400 mm, and iv) a length within a range of 10 cm to 2 m.

14. The machine according to at least one of the claims 10 to 13, wherein one or more of the first cord guide and the second cord guide comprises a plurality of parallel cord guiding channels for guiding the cords in parallel and spaced apart from each other, wherein the cord guiding channels have a diameter within a range of from 0.3 mm to 2 mm.

15. The machine according to at least one of the claims 10 to 14, wherein the cord guiding channels of the first cord guide and the cord guiding channels of the second cord guide are arranged for holding the cords extending between the first cord guide and the second cord guide in parallel to one another.
